# EUROPEAN PATENT SPECIFICATION

(11) **EP 2 896 849 B1**
(45) Date of publication and mention of the grant of the patent: **16.05.2018**
(21) Application number: 15156449.9
(22) Date of filing: 07.01.2013
(51) Int. Cl.: F16D 55/228, B22D 19/00

(54) **Caliper body**
Bremssattel
Etrier d'un frein à disque

(30) Priority: 09.01.2012 IT MI20120017
(43) Date of publication of application: 22.07.2015
(62) Divisional of application: 13705564.6
(73) Proprietor: Freni Brembo S.p.A., 24035 Curno (Bergamo) (IT)
(72) Inventor: Crippa, Cristian, I-24035 Curno, BERGAMO (IT); Cesani, Paolo, I-24035 Curno, BERGAMO (IT); Gotti, Antonio, I-24035 Curno, BERGAMO (IT)
(74) Representative: Crippa, Paolo Ernesto

(56) References cited:
- EP-A2- 0 907 034
- WO-A1-92/04999
- DE-A1-102009 002 057
- JP-A- 2 092 447

## Description

The present invention relates to a caliper body formed by casting material introduced in a shell-mould within which an assembly of at least one core suitable for making at least two chambers for pistons or cylinders, arranged adjacent to one another on at least one side of a caliper for disc brake and at least one hollow tube delimiting a predefined inner cavity, said hollow tube forming a portion of duct to convey a brake fluid in the chambers for pistons or cylinders so as to affect the exit of a piston from each of said cylinders to affect pads suitable for abutting against a disc for a disc brake.

It is known to use a tube embedded in the material which the caliper body is made of during the casting thereof.

Prior solutions are known for example from GB-2052329 in the name of Automotive Production Co. or from JP2001-107994 **in** the name of Akebono Industries. Other prior art documents are DE102009002057A1, WO9204999A1 and JP2092447A.

In particular, GB 2052329 discloses a disc brake caliper body in cast metal, in particular aluminium alloy, comprising an internal fluid duct having a non-rectilinear path defined by a tube bent to the required configuration, set into the caliper body as an insert in the casting and secured to the core for the casting thereof.

JP2001-107994 discloses the possibility of making a caliper body wherein the tube embedded inside the metal die is anchored in seats formed next to the cylinders so as to avoid interference between such ends and the pistons.

Other solutions are known from JP 8290256 in the name of Hino Motors Ltd, in which the tube is used to make nozzles, or from JP 91 77843 in the name of Akebono Brake Industries in which a solution is presented to keep the tube in the correct position during the casting.

In more detail, JP 8290256 discloses a method for making of a passage for the fluid inside a nozzle support obtained by bending a tube in a material having a melting point higher than that of the nozzle support and keeping it embedded in the nozzle support during casting. The tube is positioned in a mould having the shape of the nozzle support and is fixed to the mould at its opposite ends.

As mentioned above, JP 91 77843 provides for the positioning of a tube on a cylindrical core forming a piston seat and the attachment of the two opposite ends to the mould, as well as envisaging the injection of pressurised air inside the tube during the casting.

A similar solution is known from EP 1 116 536 in the name of the Nippon Light Metal co and Sumitomo Sei Brake System Inc.

Such document discloses the insertion of the tube in the mould and its anchorage to the core. More in particular, it provides for the use of a control element having a control pin attached inside the mould, to be inserted in one end of the tube so that such pin supports the tube in a predefined position in the mould cavity or provides that the control element has a hole in which to insert the ends of the tube.

Solutions are also known for preventing sections of tube from moving during the casting, as described in EP 0 907034, but entail considerable construction complications with the additions of manufacturing steps and complications in the control of the tube in the core box.

In particular, such document discloses a caliper body having parallel cavities for pistons fitted in said cavities, wherein the cavities communicate by means of tubes embedded inside the caliper body and wherein such tubes have projections or recesses in a diametrical direction between the cavities so as be kept in their longitudinal direction in relation to the caliper body.

In addition, the solution provided for by GB 2073633 proposes an alternative which does not however reduce the constructional complexity proposed in EP 0 907 034.

In fact, such solution provides for the insertion an attachment pin at the end of the tube to bend it in a radial direction to limit the rotation movement of the tube.

The Applicant has found an alternative solution to the state of the art so as to simplify the manufacturing process and in particular avoid that between the two adjacent cylinders a section of tube is provided to supply brake fluid to the cylinders of a caliper for disc brake.

In particular, one purpose of such solution is to prevent sections of tube from moving during the making of the caliper or during the use of the caliper entering in the cylinders.

A further purpose is to shape the section of the hydraulic duct for the brake fluid placed between the two adjacent cylinders so as to facilitate the transit of the brake fluid.

These and further purposes and advantages are achieved by a caliper body as described in claim 1.

An assembly of at least one core made of material for cores suitable for being removed after manufacture of the body cast on such core is provided, said at least one core being suitable for making at least two chambers for pistons or cylinders, arranged adjacent to one another on at least one side of a caliper for disc brake and at least one hollow tube delimiting a predefined inner cavity, said tube being made of a material suitable for preserving said inner cavity of a predefined shape even after the casting thereon of the material of which the caliper body is made, said hollow tube forming a portion of duct to convey a brake fluid in the chambers for pistons or cylinders so as to affect the exit of a piston from each of said cylinders to affect pads suitable for abutting against a disc for a disc brake, wherein at least an end portion of said hollow tube is arranged in a location of said core forming one of said cylinders so that a second portion of said hollow tube exits from said core suitable for forming said cylinder moving away from the at least one pair of cylinders.

Advantageously, in said assembly of at least one core and at least one hollow tube, said core in the portions thereof forming said at least two cylinders arranged adjacent to one another forms a shaped core tube made of a material for cores suitable for being removed following the casting of the material which the caliper is made of, said core tube connecting the two portions of core forming said adjacent cylinders to make a portion of said duct to convey brake fluid into the cylinders.

Providing a core tube formed of the core in the portions forming the two adjacent cylinders entails the advantage of being easy to shape so as to present fittings and/or flarings so as to form a passage between the cylinders permitting a facilitated flow of the brake liquid therein and/or rapid regulation of the pressure of the brake fluid present in the two adjacent cylinders. Such core tube may form a suitably shaped duct in the caliper body. Such core tube is easy to shape ensuring a predefined fitting geometry in the hydraulic duct between the two adjacent cylinders.

In addition, envisaging a core tube in the portions forming the two adjacent cylinders entails the further advantage of simplifying the manufacturing process by reducing the number of sections of tube which enter the adjacent cylinders, in as much as otherwise such sections of tube would need to be cut subsequent to the casting process, thereby requiring further expensive manufacturing steps.

In particular, by contemporarily envisaging a hollow tube positioned so as to distance the two portions of core suitable for shaping two chambers for adjacent cylinders and a core tube duct in material for cores between these two core portions it is possible to contemporarily achieve the reduction and simplification of the manufacturing steps, increasing the precision thereof: on the one hand overcoming the need for continuous tubes to be present in the two core portions which greatly complicates the subsequent removal steps, and, in addition, providing a fluidic connection between the two adjacent chambers thus obtained which ensures an even more efficient compensation of the pressures between the two adjacent cylinders making for caliper performance closer to the design specifications than the solutions of the prior art.

In addition, a further advantage is the fact of being able to achieve an optimal geometry of the hydraulic duct between the two cylinders, thanks to the possibility of shaping the core tube as required, and thereby reducing the quantity of brake fluid needed to activate the pistons.

Further purposes, solutions and advantages are presented in the embodiments described below and claimed in the attached dependent claims.

Various embodiments of the invention will be described below by means of non-limiting examples, with reference in particular to the appended figures, wherein:

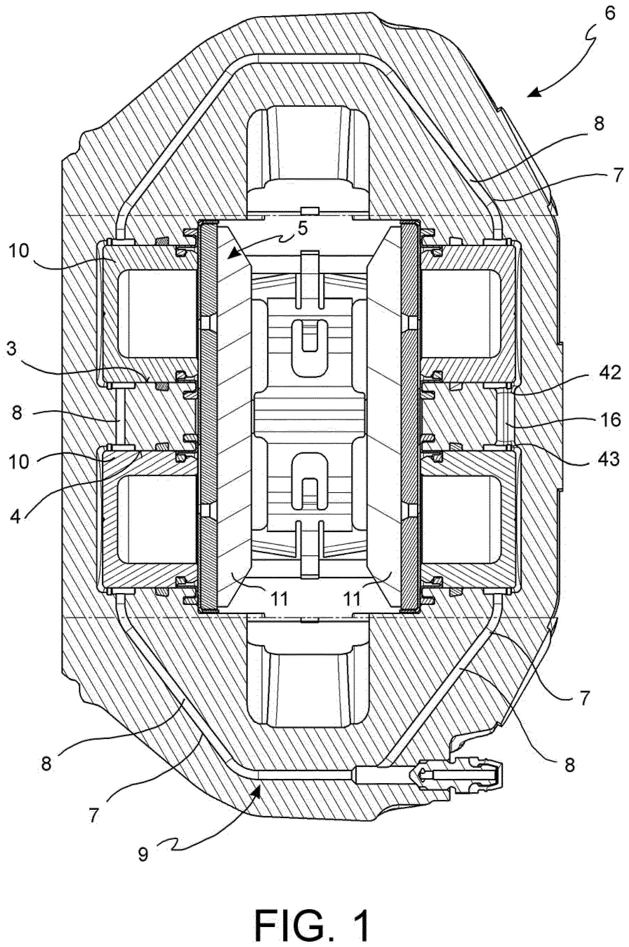

figure 1 shows a cross-section view of a caliper body according to the present invention;

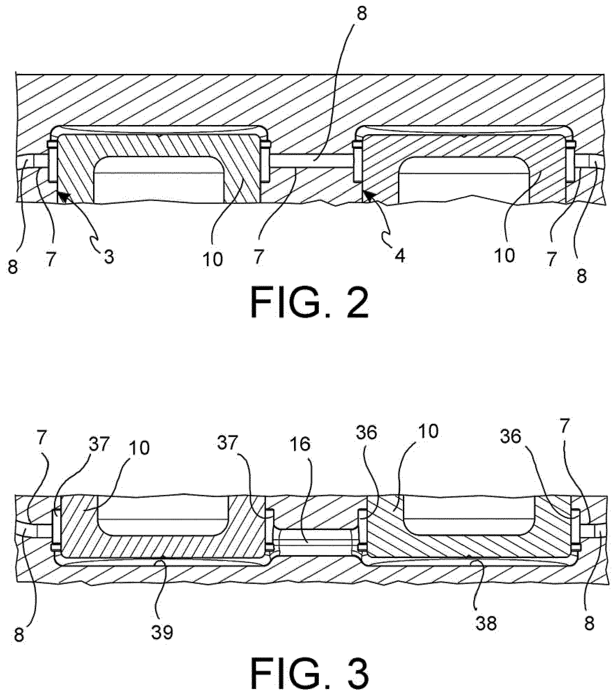

figures 2 and 3 show partial cross-sections of the caliper body comprising respectively several sections of hollow tube and a section of the duct conveying the brake fluid towards the piston chambers;

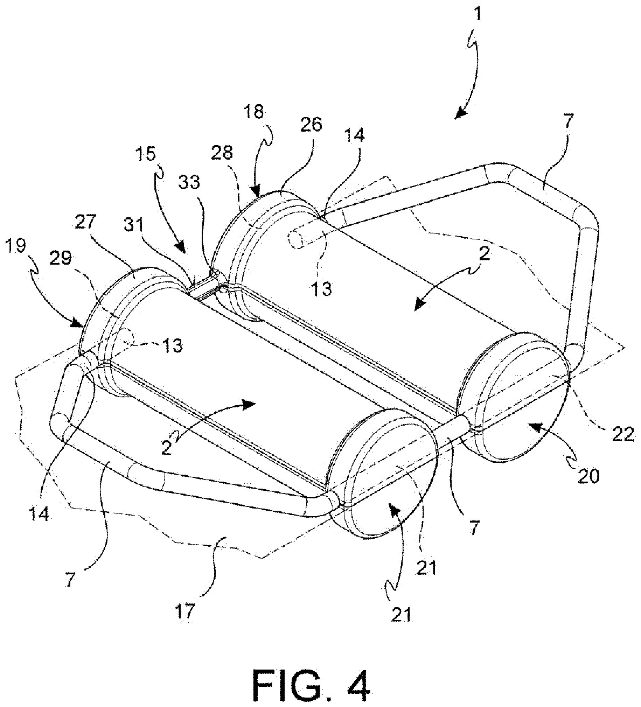

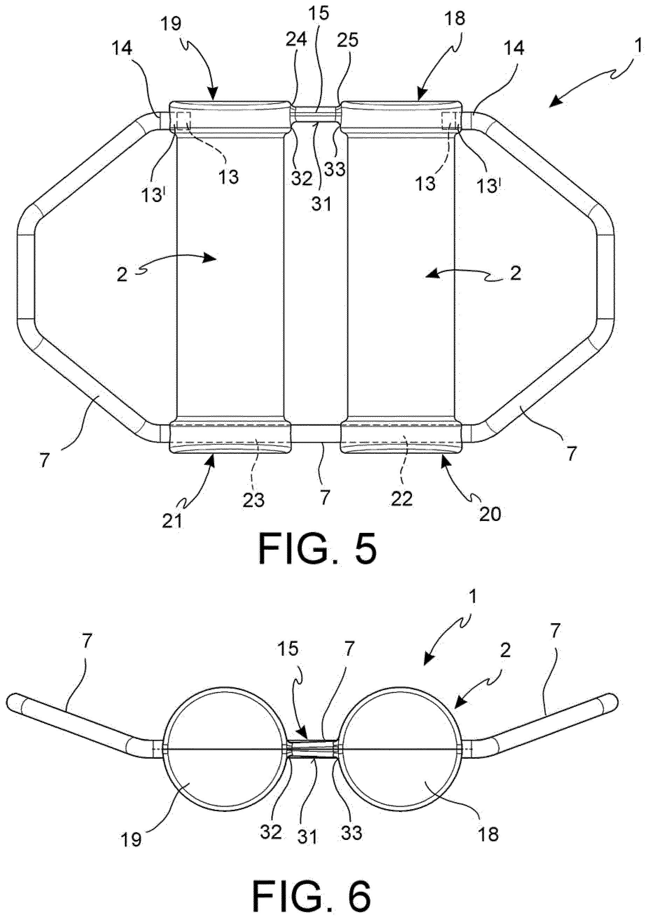

figure 4 shows a perspective view of an assembly;
figures, 5 and 6 respectively show a view from above and a front view of such assembly;

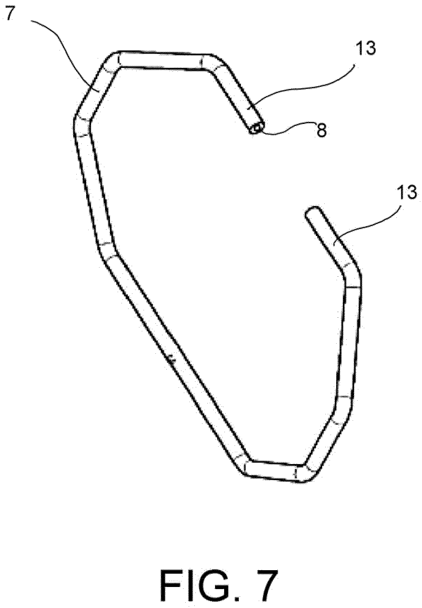

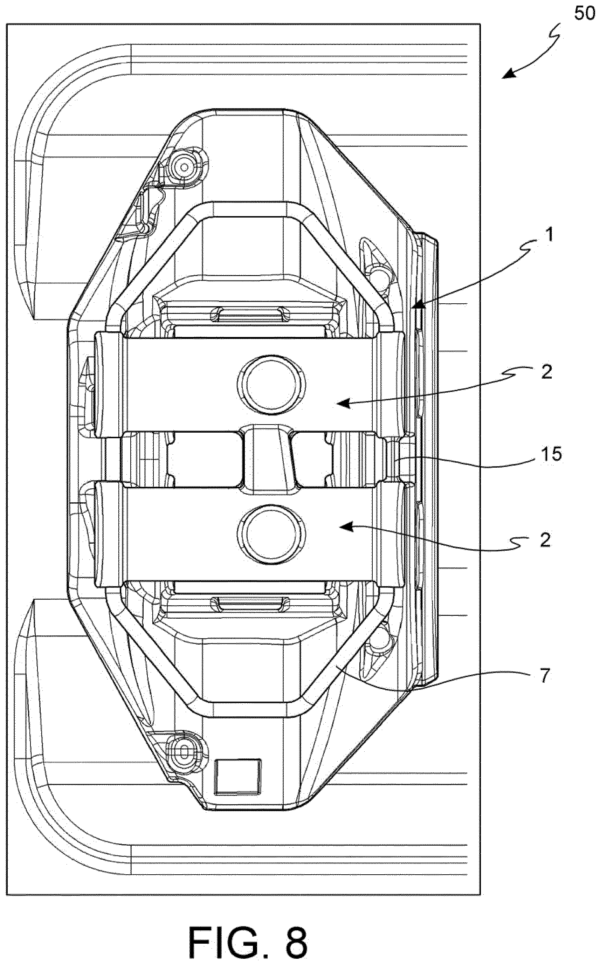

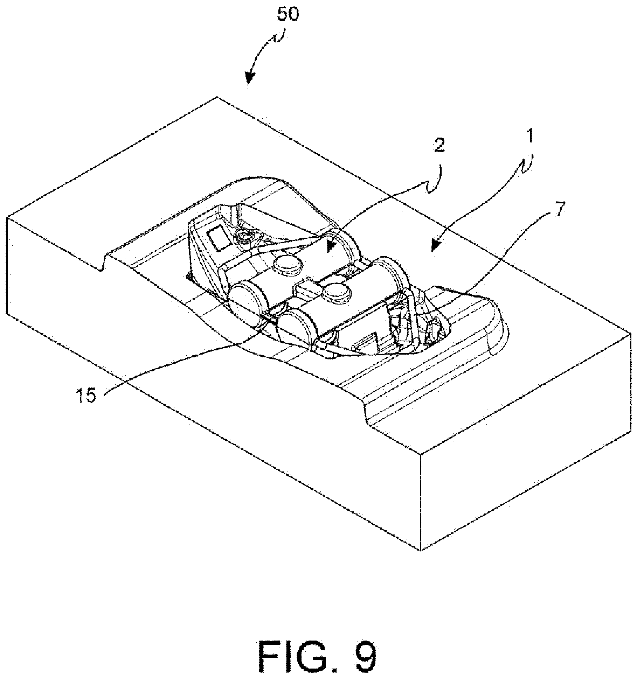

figure 7 shows a hollow tube of the aforesaid assembly;
figures, 8 and 9 respectively show a view from above and a perspective view of a shell mould inside which said the aforesaid assembly is placed;

With reference to the figures, an assembly of at least a core and at least a hollow tube is globally denoted by reference numeral 1.

The assembly 1 of at least one core 2 is made of material for cores suitable for being removed after manufacture, for example of the caliper body for disc brake. The at least one core is suitable for making at least two chambers for pistons or cylinders 3,4, arranged adjacent to one another on at least one side of a caliper for disc brake 6. The at least one hollow tube 7 delimits a predefined inner cavity 8 and is made of a material suitable for preserving said inner cavity 8 even after the high heat variation to which it is subjected on account of the casting on such hollow tube of the material of which the caliper body is made. Such hollow tube 7 forms a portion of duct 9 for conveying a brake fluid in the chambers for pistons or cylinders 3,4 so as to affect the exit of a piston 10 from each of the cylinders 3,4 to affect pads 11 suitable for abutting against a disc for a disc brake 12.

Advantageously, at least an end portion 13 of the hollow tube 7 is located in a position 18, 19 of said core 2 forming one of the cylinders 3 so that a second portion 14 of the hollow tube 7 exits from said core 2 suitable for forming said cylinder 3 moving away from the at least one pair of cylinders 3, 4.

In particular, the core 2 in the portions thereof forming the cylinders 3, 4 arranged adjacent to one another forms a shaped core tube 15 made of a material for cores suitable for being removed following the casting of the material which the caliper 6 is made of. The core tube 15 connecting the two portions 18, 19 of core 2 forming a portion of said duct 9 to convey brake fluid into the cylinders 3, 4.

The at least one hollow tube 7 comprises two sections of hollow tube 14 exiting from said portions 18, 19 of core 2 forming the adjacent cylinders, moving away from said core 2.

The at least one hollow tube 7 forms an open ring in a single piece exiting from one of said portions 18 of core 2 to form a cylinder 3 with a first end thereof and entering in an adjacent portion 19 of core 2 forming the adjacent cylinder 4 on the opposite part of the adjacent core portions with respect to said first end.

The at least one hollow tube 7 comprises at least an intermediate section 22, 23 embedded in at least a respective portion 20, 21 of core suitable for forming other cylinders, such as opposite cylinders.

The core tube 15 comprises an outer surface 31, which, when the core material is removed, forms the inner duct 16 on the caliper body 6, and therefore the surface which is lapped by the brake fluid.

The core tube comprises a first end 24 and a second end 25 for connecting to the portions 18, 19 of core 2 and the outer surface 31 is joined to the portions 18, 19 by means of fittings 32, 33 with a predetermined joining radius.

For example, the outer surface 31 comprises at least one frustoconical portion, for example, the section value of said frustoconical surface decreases moving away from at least one of said core portions 2 suitable for forming the chambers 3 and 4.

The outer surface 31 may form two opposite frustums of cones, for example connected to each other.

In other words, the outer surface 31 comprises two adjacent frustoconical portions joined continuously at a respective shared lesser base thereof so that the core tube 15 has a decreasing transversal cross-section moving from said first end 24 toward said shared lesser base and increasing from said shared lesser base towards said second end 25.

On a mould release plane 17 comprising the two core portions 18 and 19 forming the adjacent chambers 3 and 4, the core tube 15 has a substantially constant cross-section along such plane 17 for a main central portion and, instead, on an orthogonal plane to such mould release plane 17, tapers moving from one core portion 19 to the other core portion 18 suitable for forming the chambers 3 and 4.

The core tube 15 has a shape tapering from both core portions 18 and 19 forming the chambers 3 and 4 towards an intermediate portion.

Such intermediate portion is closer to one of the two portions 18 and 19 than to the other.

The aforesaid core tube 15 has a non-circular cross-section along its extension for example but not necessarily, passing from a circular cross-section next to the core portions 18 and 19 forming the chambers 3 and 4 to a laterally elongated or flattened portion.

The core portions 18 and 19 comprise a respective end face 28 and 29 suitable for forming a corresponding bottom surface 38 and 39 of the chambers 3 and 4 for the pistons 10, for example but not necessarily blind.

The core portions 18 and 19 comprise respective flared bottom portions 26 and 27 which extend next to the aforesaid end faces 28 and 29 to form corresponding annular recesses 36 and 37, such as undercuts, next to the bottom surfaces 38 and 39 in the chambers 3 and 4 of the caliper body 6. Said annular recesses may form localised widenings of the chamber, for example toroidal.

The hollow tube 7 enters or crosses such widened portions of bottom 26 and 27, for a portion 13 of predetermined length.
The hollow tube 7 enters the aforesaid widened portions of bottom 26 and 27, only for a portion 13' of length such as not to interfere with the stroke of the pistons 10 which will be housed in the chambers 3 and 4.

According to an embodiment of the present invention, a caliper body 6 formed by casting material introduced in a shell-mould within which an assembly 1 of at least a core 2 and at least a hollow tube 7 is arranged, as described above, wherein the at least one tube 7 remains embedded within the caliper body 6, is provided.

A method for making an assembly 1 as described above, comprises a step of bending the at least one hollow tube 7 according to a predetermined shape to form a portion of a duct 9 to convey a brake fluid in the chambers for pistons or cylinders 3, 4, a further step of inserting said at least one hollow tube 7 in a core box suitable for forming said at least one core 2 so that said tube has at least the ends thereof embedded in portions of said core forming at least two adjacent cylinders, and yet a further step of injecting, in said core box, material for cores forming said core and in particular the core portions suitable for forming the chambers for the two adjacent cylinders and a duct connecting these two core portions suitable for forming the two adjacent cylinders.

The aforesaid method comprises a step of making in the core box, seats suitable for forming the widened bottom portions 26 and 27 of the core.

The aforesaid method provides making a cavity in the core box suitable for forming the core tube 15 connecting the core portions 18 and 19.

Such step of making a cavity in the core box suitable for forming the core tube 15, comprises a step of shaping such cavity according to the shape of the outer surface 31 of the core tube, and in particular but not necessarily, of connecting such cavity to further cavities of the core box suitable for forming the core portions 18 and 19, or in particular but not necessarily, of connecting such cavities with the seats suitable for forming the widened portions with a predetermined joining radius.

For example, such step of shaping cavities suitable for forming the core tube 15, comprises a step of making at least one frustoconical portion, for example, but not necessarily with a decreasing cross-section value moving away from at least one of said core portions 2 suitable for forming the chambers 3 and 4. Said cross-section moving away from at least one of said core portions 2 suitable for forming the chambers 3 and 4 may decrease in value only according to a predetermined direction of the cross-section plane, for example a direction orthogonal to the plane containing the axes of said core portions 2 suitable for forming the chambers 3 and 4, forming an elongated cross-section along a direction orthogonal to the same.

According to one embodiment, such method further comprises steps of inserting the assembly of the at least one core 2 and at least one hollow tube 7 in a shell mould, a step of casting material suitable for forming the caliper body 6 in the shell mould burying said at least one tube 7.

A further step of removing the material for making cores is provided for.

For example, a method for making a caliper body comprises a step of inner turning or milling of said chambers for pistons or cylinders 3, 4, so as to remove also sections of said at least one hollow tube 7 penetrating inside the chambers for placing the chambers in communication with the at least one tube preventing said at least one tube from interfering with said pistons or cylinders.

The at least one hollow tube exits with one of its end sections into a widened bottom portion of the adjacent cylinders which is not affected by the stroke of the piston housed therein.

For example, said section of hollow tube entering the adjacent cylinders which does not affect the stroke of the pistons, is not removed.

A person skilled in the art may make numerous modifications and adaptations to the preferred embodiment of the device described above, replacing elements with others functionally equivalent so as to satisfy contingent and specific requirements while remaining within the sphere of protection of the following claims.

According to one embodiment, a caliper body has at least two chambers 3 and 4 for pistons 10 or cylinders adjacent to one another and communicating through at least an inner duct 16 suitable for the passage of brake fluid and wherein from said chambers 3 and 4 at least two other hollow ducts 7 for brake fluid exit which move away from said chambers 3 and 4. Advantageously, said inner duct 16 has at least one frusto-conically shaped section and said hollow ducts have sections 14 next to the adjacent chambers 3 and 4 having a substantially cylindrical shape.

According to one embodiment, said inner duct 16 has a decreasing cross-section as it moves away from each of said adjacent chambers. According to one embodiment, said inner duct 16 has two opposite frustoconical portions. According to one embodiment, said inner duct 16 has rounded fitting sections 42 and 43 to the chamber 3 and 4.

Envisaging an inner duct with at least one frustoconical section and sections of hollow tube next to the adjacent cylinders permits an improved compensation of the pressure of the brake fluid present in the two chambers of the adjacent cylinders making the caliper for disc brake particularly reactive.

Contemporarily envisaging sections of hollow tube having a cylindrical cross-section in the portions thereof external to the chambers for pistons or cylinders in the caliper body permits extremely accurate adjustment of the speed of reaction of the caliper or of the two adjacent pistons, and the inner duct thus shaped permits adjustment of the resistance of the brake fluid circuit by selecting a predetermined conformation of such inner duct. The core and tube assembly, as well as the caliper body comprising said assembly and method of making said caliper body, entail the following important advantages.

The core tube formed by the core in the portions forming the two cylinders adjacent to each other, has the advantage of being easily shaped so as to present fittings and/or flarings such as to form a passage between the cylinders enabling a facilitated flow of the brake liquid therein. Such core tube may form a suitably shaped duct in the caliper body. Such core tube is easy to shape ensuring a predetermined geometry of the fitting in the hydraulic duct between the two adjacent cylinders.

The presence of the core tube in the portions forming the two adjacent cylinders entails the further advantage of simplifying the manufacturing process by reducing the number of sections of tube which enter the adjacent cylinders, in as much as otherwise such sections of tube would need to be cut subsequent to the casting process, thereby requiring further expensive manufacturing steps.

A further advantage of the present invention is that, by being able to achieve an optimal geometry of the hydraulic duct between the two cylinders, thanks to the possibility of shaping the core tube as required, it is possible to reduce the quantity of brake fluid needed to activate the pistons.

## Claims

1. Caliper body (6) comprising at least two chambers (3, 4) for pistons (10) or cylinders adjacent to one another and communicating with each other through at least an inner duct (16) suitable for the passage of brake fluid and wherein from said chambers (3, 4) at least two other hollow ducts (7) for brake fluid exit which move away from said chambers (3, 4), and wherein the at least one tube (7) remains embedded within the caliper body (6), is provided; and wherein
said inner duct (16) has rounded fitting sections (42) and (43) to the chamber (3, 4) and said hollow ducts having sections (14) next to the adjacent chambers (3, 4) having a substantially cylindrical shape,
**characterized in that**
said inner duct (16) has a substantially constant cross-section along a mould release plane (17) for a main central portion and, instead, on an orthogonal plane to such mould release plane (17), tapers moving from one core portion (19) to the other core portion (18) suitable for forming the chambers (3,4)
or
said inner duct (16) has a shape tapering from both core portions (18,19) forming the chambers (3,4) towards an intermediate portion.

2. Caliper body (6) according to claim 1, wherein
said inner duct (16) has at least one frusto-conically shaped section.

3. Caliper body (6) according to claim 1 or 2, wherein
said inner duct (16) has a decreasing cross-section as it moves away from each of said adjacent chambers.

4. Caliper body (6) according to claim 1 or 2, wherein
said inner duct 16 has two opposite frustoconical portions.

## Patentansprüche

1. Sattelkörper (6), der zumindest zwei Kammern (3, 4) für einander benachbarte Kolben (10) oder Zylinder aufweist und die miteinander durch zumindest eine innere Leitung (16) miteinander in Verbindung stehen, die für den Durchtritt von Bremsfluid geeignet ist, und wobei von den Kammern (3, 4) zumindest zwei andere hohle Leitungen (7) für Bremsfluid austreten, die von den Kammern (3, 4) weg gehen, und wobei das zumindest eine Rohr (7) in dem Sattelkörper (6) eingebettet verbleibt, und wobei
die innere Leitung (16) gerundete Sitzabschnitte (42) und (43) zu der Kammer (3, 4) aufweist und die hohlen Leitungen Abschnitte (14) nächst den benachbarten Kammern (3, 4) aufweisen, die eine im Wesentlichen zylindrische Form aufweisen,
**dadurch gekennzeichnet, dass**
die innere Leitung (16) entlang einer Formtrennebene (17) für einen Hauptmittelabschnitt einen im Wesentlichen konstanten Querschnitt hat, und stattdessen auf einer zu dieser Formtrennebene (17) orthogonalen Ebene von einem Kernabschnitt (19) zu dem anderen Kernabschnitt (18), die zur Formung der Kammern (3, 4) geeignet sind, gehend verjüngt ist, oder
die innere Leitung (16) eine Form hat, die von beiden Kernabschnitten (18, 19), welche die Kammern (3, 4) bilden, zu einem Zwischenabschnitt hin verjüngt ist.

2. Sattelkörper (6) nach Anspruch 1, wobei die innere Leitung (16) zumindest einen kegelstumpfförmigen Abschnitt aufweist.

3. Sattelkörper (6) nach Anspruch 1 oder 2, wobei die innere Leitung (16) einen verringerten Querschnitt hat, wenn sie von jeder der benachbarten Kammern weg geht.

4. Sattelkörper (6) nach Anspruch 1 oder 2, wobei die innere Leitung (16) zwei gegenüberliegende kegelstumpfförmige Abschnitte aufweist.

## Revendications

1. Corps d'étrier (6) comprenant au moins deux chambres (3, 4) pour des pistons (10) ou cylindres adjacents l'un à l'autre et communiquant l'un avec l'autre au travers d'au moins un conduit intérieur (16) adapté au passage de fluide de frein et dans lequel au moins deux autres conduits creux (7) pour du fluide de frein sortent desdites chambres (3, 4), lesquels s'éloignent desdites chambres (3, 4), et dans lequel l'au moins un tube (7) reste intégré dans le corps d'étrier (6), est prévu ; et dans lequel
ledit conduit intérieur (16) présente des sections d'insertion arrondies (42) et (43) vers la chambre (3, 4) et lesdits conduits creux présentant des sections (14) près des chambres adjacentes (3, 4) présentant une forme sensiblement cylindrique,
**caractérisé en ce que**
ledit conduit intérieur (16) présente une section transversale sensiblement constante le long d'un plan de démoulage (17) pour une portion centrale principale et,
à la place, sur un plan orthogonal à un tel plan de démoulage (17), s'effile en se déplaçant d'une portion de coeur (19) à l'autre portion de coeur (18) adaptée pour former les chambres (3, 4)
ou
ledit conduit intérieur (16) présente une forme s'effilant des deux portions de coeur (18, 19) formant les chambres (3, 4) vers une portion intermédiaire.

2. Corps d'étrier (6) selon la revendication 1, dans lequel
ledit conduit intérieur (16) présente au moins une section de forme tronconique.

3. Corps d'étrier (6) selon la revendication 1 ou 2, dans lequel
ledit conduit intérieur (16) présente une section transversale décroissante lorsqu'il s'éloigne de chacune desdites chambres adjacentes.

4. Corps d'étrier (6) selon la revendication 1 ou 2, dans lequel
ledit conduit intérieur (16) présente deux portions tronconiques opposées.
